# EUROPEAN PATENT SPECIFICATION

(11) **EP 1 640 223 B1**
(45) Date of publication and mention of the grant of the patent: **19.08.2009**
(21) Application number: 05020101.1
(22) Date of filing: 15.09.2005
(51) Int. Cl.: B60R 21/18, B60R 22/46

(54) **Occupant protection system**
Insassenschutzsystem
Système de protection d'occupant de véhicule

(30) Priority: 24.09.2004 JP 2004277489
(43) Date of publication of application: 29.03.2006
(73) Proprietor: TAKATA CORPORATION, Minato-ku, Tokyo 106-8510 (JP)
(72) Inventor: Itoga, Yasuo Takata Corporation, Tokyo 106-8510 (JP)
(74) Representative: Vossius & Partner

(56) References cited:
- EP-A- 1 566 307
- EP-A- 1 568 537
- WO-A2-20/04005080
- JP-A- 2001 163 183
- US-A- 6 131 951
- US-A1- 2004 045 757

## Description

The present invention relates to an occupant protection system for protecting an occupant of a vehicle such as a car in an emergency such as a collision, and more specifically, it relates to an occupant protection system for protecting an occupant with a seatbelt system having an airbelt.

An airbelt seatbelt system is known in which part of seatbelt webbing is constructed of an airbelt, which is expanded in the event of a car emergency (for example, Japanese Unexamined Patent Application Publication No. 2003-312439). In the seatbelt system of this reference, part of a shoulder part and part of a lap part are each constructed of an airbelt.

A seatbelt system having a pretensioner that retracts one end of seatbelt webbing to apply pretension thereto is also well known (for example,JP-A-2001-287622 Patent Document 2). In this system, each of a shoulder part of the seatbelt webbing and a lap part has its own pretensioner. The shoulder pretensioner is activated first, and after a lapse of a specified time (e.g., 10 msec), the lap pretensioner is activated (JP-A-2003-312439 (Patent Document 1).

Document JP 2001 163 183 A relates to a passive safety device and controlls an air bag, an air belt and a pretensioner in accordance with the collision scaler and the preamble of claim 1. WO 2004/005080 A discloses a method for controlling the preload device of a two-level belt. Documents US-A-6 131 951 and US 2004/045 757 A relate to a pretentioner and a seatbelt device, respectively.

In a seatbelt system of the type that includes seatbelt webbing having a string of a shoulder part and a lap part, the shoulder part of the seatbelt webbing being composed of only a noninflating normal belt and the lap part having an airbelt, and the seatbelt passing through a tongue, when the system is provided with a shoulder-part pretensioner, wherein when the pretensioner and the airbelt inflator are activated at the same time, a tension generated by the retraction of the shoulder part by the pretensioner and a tension generated by the shortening force of the lap part by the inflation of the airbelt compete against each other in the vicinity of the tongue and as such, very much retraction of the shoulder part by the pretensioner is not sometimes transmitted to the lap part.

Accordingly, it is an object of the present invention to provide an occupant protection system in which a shoulder part is constructed of a normal belt, and at least part of a lap part is constructed of an airbelt, and which has a pretensioner that retracts the shoulder part in a car emergency, and in which sufficient retraction of the pretensioner is transmitted also to the lap part.

This object is achieved by the features of the appended independent claim. An occupant protection system according to the invention includes seatbelt webbing having a string of a shoulder part and a lap part, the seatbelt webbing passing through a tongue. The occupant protection system includes a pretensioner that retracts a specified length of the shoulder part in a car emergency, an airbelt that constructs at least part of the lap part, an inflator that inflates the airbelt, and activation means that activates the pretensioner and the inflator in a car emergency. The activation means activates the pretensioner first and then activates the inflator after a lapse of a specified time.

Preferably, the specified time is selected from 3 to 18 msec in a manner that depends on the characteristics of the vehicle.

If the shoulder pretensioner is triggered due to an accident, a minimum lapse of time is required before the inflation of the airbelt is activated for the above reasons. Experiments have shown that, using only a shoulder pretensioner, about 3 msec after triggering the pretensioner the belt begins to move at the buckle position towards the shoulder side. Accordingly, the minimum lapse of time to activate the inflation of the airbelt is 3 msec to make sure that -upon inflation of the airbelt- at least the shoulder part of the seatbelt is retracted by the shoulder pretensioner.

The maximum lapse of time to trigger the airbelt is determined by the fact that a crash test dummy starts to be caught by a driver's airbag at a certain period of time, in particular around 40 msec after an accident occurs, i.e. also the airbelt has to be inflated at or prior to the expiry of said approximately 40 msec period. As the time to trigger the airbelt takes about 10 msec and the inflation takes further about 12 msec, a total of about 22 msec from triggering to complete the inflation of the airbelt is needed. In order to complete said inflation of the airbelt prior to the expiry of the 40 msec airbag-period there is an allowance of a maximal delay of 18 msec for the airbelt to be triggered.

In the occupant protection system of the invention, the pretensioner is first activated in a car emergency to retract a specified length of the shoulder part. Since the airbelt is not yet inflated at that time, the retraction is applied also to the lap part, so that the lap part is slid through the webbing through hole of the tongue to move slightly toward the shoulder part. Thereafter, the airbelt is inflated. Since the airbelt is generally made of a material and a knitting structure that do not extend along the length, it is decreased in length as it is increased in width by inflation. The shortening action due to the inflation of the airbelt decreases the lap part in length to move a specified length of the webbing from the shoulder part through the through hole of the tongue toward the lap part. In this way, not only the lap part but also the shoulder part are further tightened with the inflation of the airbelt. Moreover, since the airbelt- has a characteristic to maintain the inflation for a long time, the sufficiently tightened condition of the lap part and the shoulder part is kept for a long time.

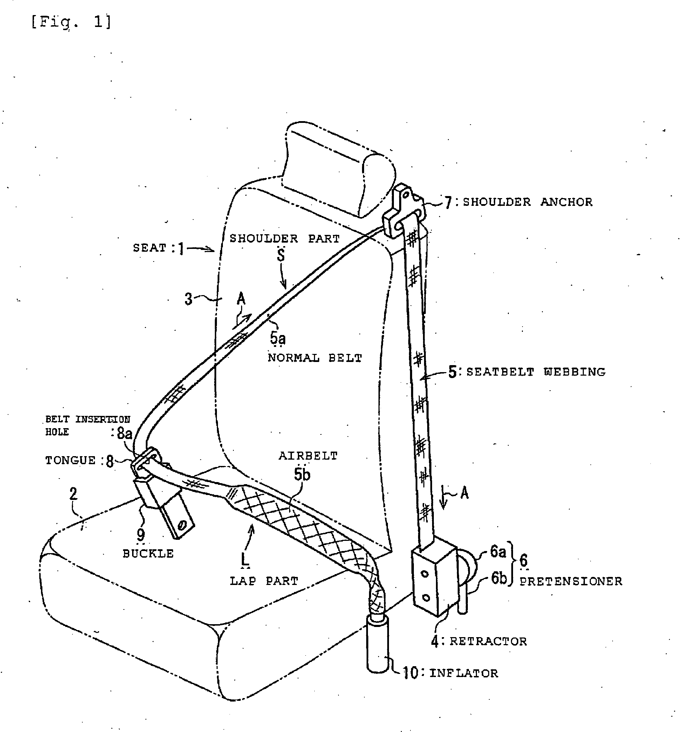

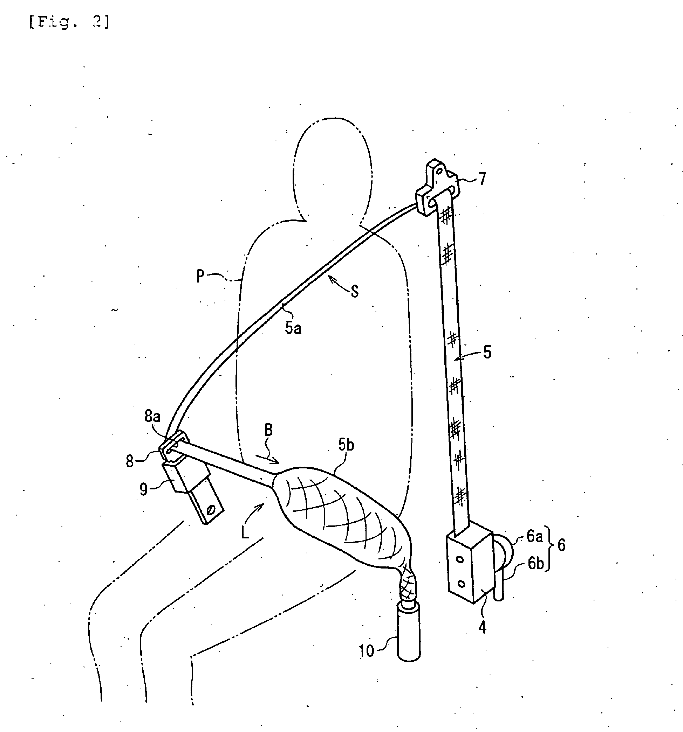

An embodiment of the present invention will be described with reference to the drawings. Fig. 1 is a perspective view of the vicinity of the front seat of a car, showing an occupant protection system according to an embodiment. Fig. 2 is a perspective view of the occupant protection system of Fig. 1 when an airbelt inflates.

A retractor 4 is disposed on one side of a seat 1 including a seat cushion 2 and a seatback 3. One end of a seatbelt webbing 5 connects to the retractor 4 such that it can be wound in and out. The retractor 4 includes a spool and a spring for winding the webbing 5, and a lock mechanism that locks the extraction of the webbing 5 when the acceleration (deceleration) of the car or the angular acceleration of the spool exceeds a specified level.

The embodiment includes a pretensioner 6 that forces the spool to rotate strongly in a car emergency, thereby winding the webbing 5 by a specified length. The pretensioner 6 includes an operation chamber 6a that accommodates a gas-pressure sensing member and a gas generator 6b that supplies gas into the operation chamber 6a. When the gas pressure from the gas generator 6b is applied to the gas-pressure sensing member, the gas-pressure sensing member is displaced, with which the spool is rotated in the direction in which the webbing is wound.

Various pretensioners may be employed, such as one constructed to pull down the retractor 4, and the invention is not limited to that described in the drawings.

The seatbelt webbing 5 is a string of a belt in which a normal belt 5a and an airbelt 5b are joined together by sewing or the like. One end of the normal belt 5a connects to the retractor 4.

The seatbelt webbing 5 passes through a shoulder anchor 7 fixed to a B-pillar etc. of the car body and then passes through a through hole 8a of a tongue 8. The tongue 8 can be attached to or detached from a buckle 9 disposed on the other side of the seat 1.

The other end of the airbelt 5b connects to an inflator 10 disposed on one side of the seat 1.

The part of the seatbelt webbing 5 close to the retractor 4 with respect to the tongue 8 is a shoulder part S, while the part close to an inflator 10 is a lap part L.

The gas generator 6b of the pretensioner 6 and the inflator 10 are turned on by an electric current from an ignition control unit (not shown).

The operation of the occupant protection system with such a structure will be described.

When an occupant P (Fig. 2) who is sitting in the seat 1 inserts the tongue 8 into the buckle 9, the shoulder part S is routed around the upper half of the occupant and the lap part L is routed around the waist.

If the vehicle comes across an emergency such as a front collision, the ignition control unit first turns on the gas generator 6b of the pretensioner 6 to activate the pretensioner 6, thereby retracting a specified length of the seatbelt webbing 5 in the direction of arrow A in Fig. 1. Thus, the shoulder part S is moved in the direction of the arrow A to be tightened. Part of the lap part L also passes through the through hole 8a of the tongue 8 toward the shoulder part S, so that the lap part L is also tightened.

After a lapse of a specified time (e.g., 3 to 18 msec), the ignition control unit activates the inflator 10. When the gas from the inflator 10 flows into the airbelt 5b to inflate the airbelt 5b, as shown in Fig. 2, the airbelt 5b becomes short. Specifically, the airbelt 5b has a material and a woven structure that hardly extend in length, so that, when it increases in diameter with inflation, the airbelt 5b becomes short. As a result, the normal belt 5a is drawn by the airbelt 5b in the direction of arrow B in Fig. 2 to tighten the lap part L, and move part of the shoulder part S toward the lap part L through the through hole 8a of the tongue 8, thereby further tightening the shoulder part S. Since the airbelt 5b can keep its inner pressure longer than common airbags, the airbelt 5b draws the normal belt 5a for a relatively long time. The shoulder part S and the lap part L are therefore maintained in high tension throughout for a long time, providing sufficient protection for the occupant.

A driver airbag system or a passenger airbag system (not shown) is disposed in front of the seat 1. The airbags also inflate in an emergency.

The above-described embodiment is merely an example of the invention and the invention is not limited to the illustration. For example, the buckle 9 may also have a pretensioner function. A lap pretensioner may be disposed which applies pretension to the airbelt 5b by drawing down the inflator 10. It is preferable that the ignition timing of the buckle pretensioner and the lap pretensioner in an emergency be the same as that of the retractor pretensioner; however, they may be slightly shifted in time.

When such various pretensioners are added, the amount of retraction of the webbing by the pretensioners may be set relatively small.

A seat bag system (not shown) may be disposed under the front of the seat cushion 2 so that the forward movement of the lower half of the occupant can be prevented by lifting or hardening the front of the seat cushion 2 by inflating the seat bag in a front collision.

## Claims

1. An occupant protection system including seatbelt webbing (5) having a string of a shoulder part (S) and a lap part (L) the seatbelt webbing (5) passing through a tongue (8), the occupant protection system comprising:
a pretensionner (6) that retracts a specified length of the shoulder part (S) in a car emergency;
an airbelt (5b) that constructs at least part of the lap part (L);
an inflator (10) that inflates the airbelt (5b); and
activation means that activates the pretensioner (6) and the inflator (10) in a car emergency, **characterized in that**
the activation means activates the pretensioner (6) first and then activates the inflator (10) after a lapse of a specified time, wherein the airbelt (5b) becomes short when inflated.

2. The occupant protection system according to claim 1, wherein the specified time is from 3 to 18 msec.

## Patentansprüche

1. Insassenschutzsystem mit einem Sitzgurtband (5) mit einem Strang aus einem Schulterabschnitt (S) und einem Schoßabschnitt (L), wobei das Sitzgurtband (5) durch eine Einstecklasche (8) hindurchführt, mit:
einem Gurtstraffer (6), der die spezifizierte Länge des Schulterabschnitts (S) in einem Fahrzeugnotfall verringert;
einem Luftgurt (5b), der mindestens einen Abschnitt des Schoßabschnitts (L) bildet;
einem Gasgenerator (10), der den Luftgurt (5b) aufbläst; und
einer Aktivierungseinrichtung, die den Gurtstraffer (6) und den Gasgenerator (10) in einem Fahrzeugnotfall aktiviert, **dadurch gekennzeichnet, dass**
die Aktivierungseinrichtung den Gurtstraffer (6) zuerst aktiviert und dann den Gasgenerator (10) nach Ablauf einer spezifizierten Zeit aktiviert, wobei der Luftgurt (5b) im aufgeblasenen Zustand kürzer wird.

2. Insassenschutzsystem nach Anspruch 1, wobei die spezifizierte Zeit im Bereich von 3 bis 18 ms liegt.

## Revendications

1. Système de protection d'occupant de véhicule comprenant une bande de ceinture (5) ayant un cordon d'une partie épaulière (S) et d'une partie ventrale (L), la bande de ceinture (5) passant par une languette (8), le système de protection d'occupant comprenant :
un prétensionneur de ceinture (6) rétractant une longueur spécifiée de la partie épaulière (S) dans un cas d'urgence ;
une ceinture d'air (5b) qui forme au moins une partie de la partie ventrale (L) ;
un gazogène (10) qui gonfle la ceinture d'air (5b) ; et
un dispositif d'activation qui déclenche le prétensionneur de ceinture (6) et le gazogène (10) dans un cas d'urgence, **caractérisé en ce que**
le dispositif d'activation déclenche d'abord le prétensionneur de ceinture (6) et déclenche ensuite le gazogène (10) après écoulement d'un temps prédéterminé, dans lequel la ceinture d'air (5b) se raccourcit dans l'état gonflé.

2. Système de protection d'occupant de véhicule selon la revendication 1, dans lequel le temps prédéterminé est de 3 à 18 ms.
